# EUROPEAN PATENT APPLICATION

(11) **EP 4 729 177 A2**
(43) Date of publication of application: **22.04.2026**
(21) Application number: 25220471.4
(22) Date of filing: 03.12.2025
(51) Int. Cl.: B04B 1/20, B04B 15/00, F16N 7/38

(54) **HYDRAULIC CONTROL AND LUBRICATION UNIT FOR CENTRIFUGE MACHINES**

(71) Applicant: Haus Makina Sanayi Ticaret Anonim Sirketi, 09010 Aydin (TR)
(72) Inventor: Saglam, Erdem, 09010 Aydin (TR); Gokkurt, Ertugrul, 09010 Aydin (TR); Poyraz, Ege, 09010 Aydin (TR)
(74) Representative: Sevinç, Cenk

(57) **Abstract**

The present invention relates to a hydraulic control and lubrication unit integrated into the decanter centrifuge machine, which ensures lubrication and hydraulic piston controls within the decanter centrifuge machine.

## Description

### Technical Field of the Invention

The invention relates to a hydraulic control and lubrication unit integrated into the decanter centrifuge machine, which ensures lubrication and hydraulic piston controls within the decanter centrifuge machine.

### State of the Art

The decanter centrifuge is an industrial machine designed to perform solid-liquid or solid-liquid-liquid separation based on the difference in density between phases. The primary structural component of the machine is the rotating bowl group, which is continuously filled with the product-a mixture of solid and liquid phases. Operating at high rotational speeds, the bowl enables effective separation by propelling the denser solid phase toward the outer perimeter while allowing the lighter liquid phase to flow inward along the axis. This separation process is continuous and contributes significantly to the operational efficiency of the system. The rotating bowl group is supported by bearing connections at both ends, ensuring balanced and safe operation over extended periods.

The bearing connections are subject to continuous rotational forces and therefore require regular lubrication to reduce friction, increase wear resistance, and control the bearing temperature. Lubrication is performed either manually or automatically, depending on the system design. Lubricating oil or grease is used as the lubricant. In automatic lubrication configurations, external grease pumps or external hydraulic oil lubrication units are employed. The effectiveness of lubrication setup directly influences the overall performance and longevity of the decanter.

The decanter includes two separate outlets-one for the liquid phase and one for the solid phase. At the solid phase outlet, a gate valve is installed to redirect residual fluid during machine downtime (commonly referred to as purge liquid) or to control cleaning fluid flow during wash cycles. These gate valves are typically operated by a gate valve piston, which may be pneumatic, hydraulic, or electric motor-driven, depending on the design and infrastructure of the plant. The valve operation is a key factor in maintaining proper process control and hygiene. Additionally, opening the decanter upper case can be performed either manually or automatically. For automatic opening, an external hydraulic hand pump is used, which simplifies maintenance and cleaning tasks but also increases the system footprint and may introduce occupational safety concerns if activated during operation.

Lubrication is carried out either manually by an operator or automatically through external grease pumps or hydraulic oil lubrication units. However, in current systems, the use of an external unit for lubrication leads to increased space occupation within the facility, which is a disadvantage, especially in compact industrial setups. In manual lubrication systems, the process depends on operator intervention, making the system vulnerable to human error and decreasing overall reliability. In automatic systems, lubrication is performed based on time intervals rather than real-time needs, which limits the ability to respond dynamically to actual operational demands.

In systems using liquid lubricating oil, both the flow rate and pressure must be manually adjusted. Temperature data is merely monitored and is not incorporated into any control algorithm, thus excluding it from active feedback mechanisms. In grease-based lubrication systems, flow rate, temperature, and pressure are not monitored at all-lubrication simply occurs at set intervals. This approach reduces lubrication efficiency and shortens the lifespan of the bearing connections. Moreover, current setups lack oil contamination sensor, making it impossible to detect oil degradation. As a result, maintenance needs cannot be accurately assessed, leading to reduced energy efficiency and an increased risk of mechanical wear or failure.

The opening of the decanter upper case is typically performed manually using a hydraulic hand pump. This method requires physical labor during cleaning and maintenance and, due to the use of external equipment, increases the machine's spatial footprint. More critically, the possibility of opening the cover while the decanter is operating presents significant occupational safety risks, endangering operators and introducing major safety gaps in the production environment.

Gate valves located on the solid discharge line are usually actuated by pneumatic gate valve pistons. The operational reliability of these pistons heavily depends on the quality and availability of compressed air provided by the plant. Not all facilities are equipped with adequate air systems, which can result in malfunctions such as piston jamming or failure to actuate. These faults disrupt process flow and negatively impact overall production efficiency.

In the state of the art, lubrication units are available for centrifuge machines. However, in the state of the art, the external lubrication of the bowl bearings using separate units results in additional space requirements for the machine. Manual lubrication systems increase the risk of errors due to operator dependency and negatively affect maintenance continuity. Liquid lubrication systems require external water for cooling, which introduces additional costs and can lead to elevated bearing temperatures in case of failures. In lubrication with grease, there is no control over flow rate, pressure, or temperature; in liquid lubrication, temperature data is only used for monitoring purposes. Furthermore, current systems lack a sensor to detect oil contamination, making maintenance planning difficult and reducing the service life of the bearings. The manual opening of upper cases using a hand pump increases labor requirements during cleaning and maintenance and also poses a safety risk. Additionally, pneumatically actuated gate valves may not function properly in all facilities due to their reliance on compressed air, leading to interruptions in valve operations.

As a result, due to the negativity described above and the inadequacy of existing solutions on the subject, it has become necessary to make a development in the relevant technical field.

### Objects of the Invention

The present invention relates to a hydraulic control and lubrication unit integrated into the decanter centrifuge machine, which ensures lubrication and hydraulic piston controls within the decanter centrifuge machine.

The object of the present invention is to enable the Hydraulic Control and Lubrication Unit to be integrated into the decanter centrifuge machine. Thus eliminates the need for additional space.

Another object of the present invention is to automate the lubrication process. This eliminates the need for an operator for lubrication, preventing operator-induced errors.

Another object of the present invention is to use an air-cooled system to cool the lubrication oil. This eliminates the need for cooling water required for the lubrication oil.

Another object of the present invention is to determine the lubrication requirement based on the data received from the temperature sensors.

Another object of the present invention is to monitor oil contamination using oil contamination sensors. This ensures timely oil changes and prevents bearing damage that could occur due to oil contamination.

Another object of the present invention is to control the movement of upper cases with the decanter control panel. This eliminates the need for additional labor and ensures safety by preventing the opening of the upper cases during operation.

Another object of the present invention is to control the gate valve with a hydraulic piston. This resolves the issues of failure to open or close the gate valve due to low pressure and eliminates the need for air for the gate valve.

### Description of the Figures

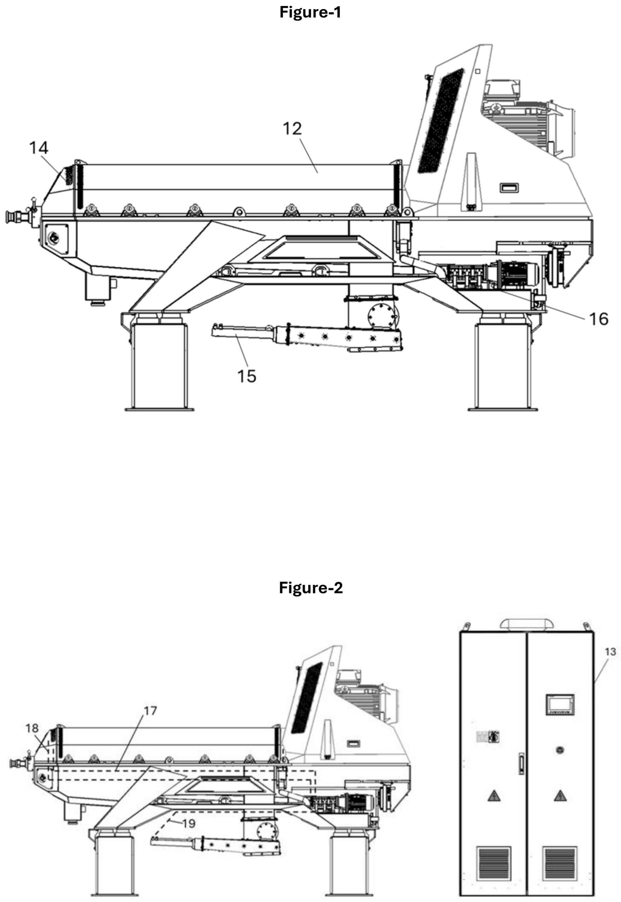

Figure 1 drawing showing the view of the Hydraulic Control and Lubrication Unit mounted on the centrifuge machine.
Figure 2 drawing showing the general view of the centrifuge machine.

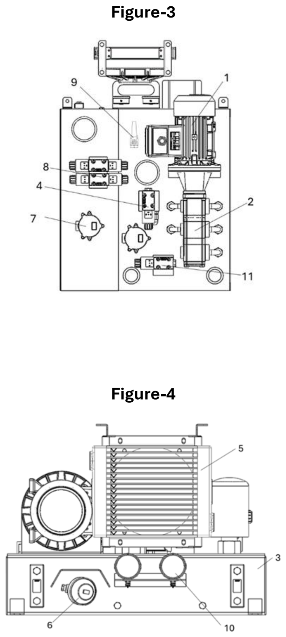

Figure 3 drawing shows the top-view of the hydraulic control and lubrication unit.
Figure 4 drawing shows the rear-view image of the Hydraulic Control and Lubrication Unit.

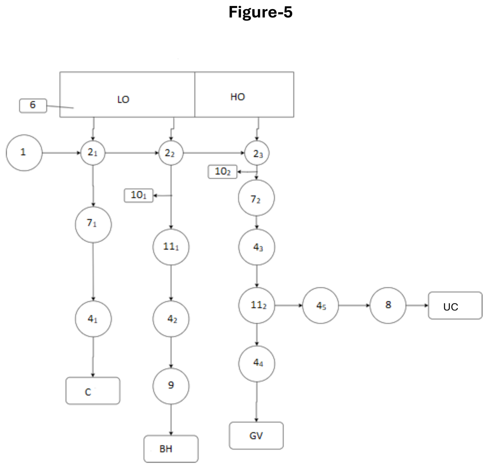

Figure 5 drawing shows the diagram of the Hydraulic Control and Lubrication Unit.

### Reference Numerals:

1: Motor
2: Pump
3: Oil Tank
4: Flow Director
5: Air-Cooled Heat Exchanger
6: Temperature Sensor
7: Oil Contamination Sensor
8: Speed Control Valve
9: Valve
10: Pressure Gauge
11: Pressure Control Valve
12: Decanter
13: Decanter Control Panel
14: Upper Case Piston
15: Gate Valve Piston
16: Hydraulic Control and Lubrication Unit
17: Bearing Connections
18: Upper Case Piston Connection
19: Gate Valve Piston Connection
LO: Lubricating Oil
HO: Hydraulic Oil
C: Cooling
BH: Bearing Housing
GV: Gate Valve
UC: Upper Case

### Description of the Invention

The present invention relates to a hydraulic control and lubrication unit integrated into the decanter centrifuge machine, which ensures lubrication and hydraulic piston controls within the decanter centrifuge machine.

The invention is a hydraulic control and lubrication unit (16), comprising at least one motor (1) for powering and operating the pumps (2); at least one pumps (2) for transferring oil to the lubrication line, hydraulic line and cooling line; an oil tank (3) containing hydraulic oil (HO) and lubricating oil (LO) and having at least two compartments to prevent mixing of hydraulic oil (HO) and lubricating oil (LO); a flow director (4) for directing hydraulic oil (HO) and lubricating oil (LO) to the relevant line; air-cooled heat exchanger (5) or water-cooled heat exchanger for cooling the lubricating oil (LO); temperature sensor (6) that measures the temperature of the lubricating oil (LO) in the oil tank (3); oil contamination sensor (7) that measures the contamination of the hydraulic oil (HO) and lubricating oil (LO) and sends a signal to the decanter control panel (13) when the hydraulic oil (HO) and lubricating oil (LO) are contaminated; speed control valve (8) that regulates the flow rate of hydraulic oil (HO) directed to the upper case pistons (14) and prevents sudden closure of the upper case pistons (14) in case of a pressure drop; valve (9) that controls the flow rate of lubricating oil (LO) for the bowl bearing lubrication; pressure gauge (10) that measures and displays the pressure of the hydraulic and lubrication lines; pressure control valve (11) that allows adjustment of the pressure and flow rates in the lubrication and hydraulic lines; decanter control panel (13), which includes a user interface and controls the electrical system of the decanter, which checks the switches and sensors, activates the hydraulic control and lubrication unit motor (1), operates the pumps (2), monitors the temperature data via the temperature sensor (6) and the oil contamination status via the oil contamination sensor (7), managing the cooling and lubrication operations through the air-cooled heat exchanger fan (5), flow directors (4), and valve (9); adjusts the pressure using the pressure gauges (10) and pressure control valves (11); controls the opening and closing of the gate valve (GV) via the gate valve piston (15) by tracking the torque value; and in maintenance and service mode, manages the opening and closing of the upper case (UC) via the upper case piston (14), and is configured to check for the presence of the lubrication line, the hydraulic line and the cooling line; the gate valve piston (15), which is connected to the decanter (12) via the gate valve piston connection (19), is located at the solid product outlet of the decanter (12) and controls the flow and the upper case piston (14), which is connected to the decanter via the upper case piston connection (18), controls the upper cases (UC) of the decanter housing.

The hydraulic control and lubrication unit (16) consists of three lines: the cooling line, the lubrication line, and the hydraulic piston line. The cooling line is the line where the lubrication oil is cooled by an air-cooled heat exchanger. In cases where necessary (such as environments with high ambient temperatures), a water-cooled heat exchanger is used in the cooling line. The lubrication line is the line where the oil is transferred to the bowl bearing housing. The hydraulic piston line is the line where hydraulic oil is transferred to the upper case (UC) piston and the gate valve piston (15). In addition to these lines, there is a gearbox lubrication line. The gearbox line is the line where lubrication oil is transferred to the gearbox.

The hydraulic control and lubrication unit (16) consists of three lines: the cooling line, the lubrication line, and the hydraulic piston line. The cooling line operates continuously if the oil temperature and the temperature of the bearing housing (BH) exceed a predefined threshold after the decanter start-up process.

The hydraulic piston line is used to open the upper case (UC) connected to the hydraulic line for decanter (12) adjustment, regular maintenance, and cleaning operations. The opening of the upper case (UC) is initiated upon a command from the operator via the decanter control panel (13). The upper case (UC) does not open while the decanter (12) is in operation.

The gate valve (GV), which is connected to the same line, is automatically activated by the decanter control panel (13) during the stopping and starting phases of the decanter (12).

In one embodiment of the invention, the opening and closing of the gate valve (GV) can also be manually controlled by the operator.

The lubrication unit (16) integrated into the decanter centrifuge machine (12) subject to the invention starts operating automatically upon the activation of the centrifuge machine (12). Lubrication is performed fully automatically by the decanter control panel (13) under predefined conditions.

In one embodiment of the invention, the lubrication unit (16) can also be manually controlled by the operator via the decanter control panel (13).

The gate valve (GV) control is also automatically carried out by the decanter control unit (13) under predefined conditions, and if necessary, the operator may manually perform the opening and closing of the gate valve (GV) via the decanter control panel (13). The upper case pistons (14) operate when the operator gives a command to the decanter control panel (13) in cases such as maintenance, service, or malfunction.

In the invention, during the pressure adjustment process with the pressure control valve (11), pressure control is dynamically performed via the decanter control panel (13) during machine operation, since an automatic pressure control valve (11) is used. The pressure adjustment is dynamically determined and set by the control panel (13).

In one embodiment of the invention, the system is manually controlled by the operator, and the pressure control valve (11) is adjusted only once during the initial setup of the machine.

The decanter control panel (13) is the complete unit that provides the electrical system and operating method of the decanter (12), and includes a PLC. It is equipped with a user interface that enables interaction with the operator. Through this interface, the operator controls operations such as starting the decanter (12), opening the decanter cover, and product feeding, monitors the data received from the sensors on the machine during decanter operation, and it ensures the operation of the hydraulic control and lubrication unit (16).

In one embodiment of the invention, this interface is a touch screen.

The hydraulic control and lubrication unit (16) operates with at least one motor (1). The motor (1) transmits mechanical energy to at least three pumps located on the hydraulic control and lubrication unit (16). Each of the cooling line, lubricating line, and hydraulic piston lines are driven by at least one pump. The first pump (2₁) supplies the lubricating line with lubricating oil (LO) at a flow rate of 0-15 L/min and a pressure of 0-30 bar. The second pump (2₂) supplies the cooling line with lubricating oil (LO) at a flow rate of 0-60 L/min and a pressure of 0-30 bar. The third pump (2₃) supplies the hydraulic piston line with hydraulic oil (HO) at a flow rate of 0-10 L/min and a pressure of 0-100 bar.

The first oil contamination sensor (7₁) is located on the cooling line. The contamination level of the lubricating oil is monitored by this sensor. On the lubricating line, the flow rate-ensuring equal distribution to both bearing housings (BH)-is regulated by a valve (9), and the line pressure is adjusted by a pressure control valve (11). On the hydraulic piston line, a flow director (4) is used to control the opening and closing movements of the pistons, while a speed control valve (8) regulates the flow rate of the hydraulic oil (HO) to the pistons. The speed control valve (8) used here is a valve that prevents reverse fluid flow. It prevents the upper case (UC) from closing in case of power failure or similar situations. Additionally, a second oil contamination sensor (7₂) located on the hydraulic piston line monitors the contamination level of the hydraulic oil (HO).

Each of the cooling lines, lubricating lines, and hydraulic piston lines are driven by at least one pump. The first pump (2₁) delivers lubricating oil (LO) to the cooling line. The second pump (2₂) transfers lubricating oil (LO) from the oil tank (3) to the bearing connections (17). The delivery of oil to the cooling line is carried out via the first flow director (4₁), and the delivery of oil to the bearing connections is carried out via the second flow director (4₂). The third pump (2₃) operates for the hydraulic line, which supplies oil to the upper case (UC) and the gate valve pistons (15). In this line, piston control is also performed through flow directors. The third flow director (4₃) directs the flow into the hydraulic line, the fourth flow director (4₄) directs it to the gate valve (GV), and the fifth flow director (4₅) directs the flow to the upper case (UC).

In the cooling line, lubricating line, and hydraulic piston lines of the hydraulic control and lubrication unit (16), when the components on the lines are not in operation, the flow is bypassed using flow directors (4), and the oil in the respective line is returned to the oil tank (3) through a non-resistant path. In this way, the energy consumption of the motor (1) is reduced when the lines are deactivated.

The oil tank (3) of the invention consists of two separate compartments: one designed for lubricating oil (LO) and the other for hydraulic oil (HO).

In one embodiment of the invention, the oil tank (3) has a total capacity of 0-200 liters, configured to carry 0-125 liters of lubricating oil and 0-75 liters of hydraulic oil.

The hydraulic control and lubrication unit (16) is positioned within the decanter (12) machine and is mechanically connected to the bowl bearing connections (17), the gate valve piston (15), and the upper case piston (14). The electrical connections of the hydraulic control and lubrication unit (16) are made to the decanter control panel (13). The lubricating oil (LO) used for bearing lubrication is added to the first compartment of the unit, while the hydraulic oil (HO) required for the pistons is added to the second compartment. Upon machine startup, the second pump (2₂) of the unit is activated and performs bearing lubrication at a specified flow rate (0-15 L/min). The temperature of the lubricating oil (LO) is monitored via the temperature sensor (6) located on the hydraulic control and lubrication unit (16). When the oil temperature reaches the specified level (0-120 °C), the first pump (2₁) activates and simultaneously circulates the oil through the cooling line (C) to perform oil cooling, using the air-cooled heat exchanger (5). The third pump (2₃) on the hydraulic control and lubrication unit (16) is used to operate the gate valve piston (15) and the upper case piston (14). The hydraulic oil (HO) in this line is directed to the corresponding piston based on the commands entered into the algorithm of the decanter control panel (13), via flow directors (4) located on the line. The operating cycle of the machine continues in this manner.

The hydraulic control and lubrication unit (16) is an integrated system within the decanter. The hydraulic control and lubrication unit (16) and its system connections are located inside the chassis. Therefore, no additional installation area is required beyond the space allocated for the decanter.

The lubrication of the bowl bearing connections (17) is performed automatically, thereby removing the need for operator intervention. An air-cooled heat exchanger (5) is used to cool the lubricating oil (LO).

The flow rate control of the lubricating oil (LO) is managed via flow directors (4) through the decanter control panel (13). The decanter control unit uses oil temperature and bearing temperature values as input and regulates the flow rate and temperature of the lubricating oil (LO).

The oil contamination status is detected by the oil contamination sensor (7) located on the hydraulic control and lubrication unit (16). When the oil becomes contaminated, the oil contamination sensor (7) sends a signal to the decanter control unit (13), triggering a warning from the decanter. This ensures that the oil is replaced at the correct time. As a result, bearing damage caused by dirty oil is prevented, and the service life of the bearings is extended. Moreover, the energy efficiency of the system operating with clean oil is increased.

The upper cases (UC) are not operated manually but are controlled by pistons in connection with the decanter control panel (13). Additionally, this design enhances safety by preventing the cover from opening while the decanter bowl is in operation.

The gate valve (GV) is controlled by a hydraulic piston. The hydraulic system enables higher pressures compared to pneumatic systems, thereby preventing opening and closing malfunctions of the gate valve that may occur due to low pressure.

The operator presses the start button of the decanter centrifuge machine (12) to initiate the operation.

Operating method steps of the hydraulic control and lubrication unit for centrifuge Machines:
➢ Starting the decanter centrifuge machine by the operator pressing the start button of the decanter centrifuge machine,
➢ Checking of the switches and sensors of the decanter centrifuge machine by the decanter control panel (13),
   - In case an error signal is received, displaying a warning to the user and repeating the step "Starting the decanter centrifuge machine by the operator pressing the start button of the decanter centrifuge machine",
   - In case no error signal is received, proceeding to the step 'activating the hydraulic control and lubrication unit motor (1) by the decanter control panel (13)',
➢ Activating the hydraulic control and lubrication unit motor (1) by the decanter control panel (13),
➢ The operation of the pumps (2) by the decanter control panel (13),
   Cooling
      - Checking the lubricating oil temperature value by the decanter control panel (13) using the data received from the temperature sensor (6),
         ∘ If the lubricating oil (LO) temperature value based on the data from the temperature sensor (6) is not above the predefined temperature value;
            ▪ the decanter control panel (13) turns off the air-cooled heat exchanger fan (5),
            ▪ Proceeding to the step "Operating the first pump (2₁), which is the cooling line pump, by the decanter control panel (13)",
         ∘ If the lubricating oil (LO) temperature value based on the data from the temperature sensor (6) is above the predefined temperature value, proceeding to the step "Activating the air-cooled heat exchanger fan (5) by the decanter control panel (13)",
      - Activation of the air-cooled heat exchanger fan (5) by the decanter control panel (13),
      - Operation of the first pump (2₁), which is the cooling line pump, by the decanter control panel (13),
         ∘ Repeating the step "Checking the lubricating oil (LO) temperature value by the decanter control panel (13) using the data received from the temperature sensor (6)",
      - Checking of the first oil contamination sensor (7₁) by the decanter control panel (13),
         ∘ If contamination information is received from the first oil contamination sensor (7₁),
            ▪ The decanter control panel (13) displays an oil change warning on the machine screen,
            ▪ Proceeding to the step "Sending lubricating oil (LO) to the cooling line by the decanter control panel (13) via the first flow director (4)",
         ∘ If no contamination information is received from the first oil contamination sensor (7₁), proceeding to the step "Sending lubricating oil (LO) to the cooling line by the decanter control panel (13) via the first flow director (4)",
      - Sending lubricating oil (LO) to the cooling line by the decanter control panel (13) via the first flow director (4₁),
      - Proceeding to the step "Operation of the rotating components of the decanter (12) by the decanter control panel (13)",
   Lubrication
      - Operation of the Second pump (2₂), which is the lubrication line pump, by the decanter control panel (13),
      - Adjustment of the lubrication line pressure by the decanter control panel (13) or by the operator via the first pressure control valve (11₁),
         o If the lubricating oil (LO) pressure is not adjusted to the predefined value via the First Pressure Control Valve (11), returning to the step "Receiving the pressure value information by the decanter control panel (13) via the first pressure gauge (10₁)",
         ∘ If the lubricating oil (LO) pressure is adjusted to the predefined value via the First Pressure Control Valve (11₁), proceeding to the step "Sending lubricating oil (LO) to the lubrication line by the decanter control panel (13) via the second flow director (4₂) and valve (9)"',
      - Sending lubricating oil (LO) to the lubrication line by the decanter control panel (13) via the second flow director (4₂) and valve (9),
      - Lubrication of the bearing connections (17),
      - Checking the temperature value of the bearing connections (17) by the decanter control panel (13) using the temperature sensor (6),
         ∘ If the temperature of the bearing connections (17) is above the predefined temperature value,
            ▪ the decanter (12) is stopped,
            ▪ returning to the step "Starting the decanter (12) by the operator pressing the start button of the decanter centrifuge machine",
         ∘ If the temperature of the bearing connections (17) is below the predefined value, proceeding to the step "Operation of the rotating components of the decanter (12) by the decanter control panel (13)".
      - Proceeding to the step "Operation of the rotating components of the decanter (12) by the decanter control panel (13)",
   Hydraulic
      - Operation of the third pump (2₃), which is the hydraulic piston line pump, by the decanter control panel (13),
      - Receiving the pressure value information by the decanter control panel (13) via the second pressure gauge (10₂),
      - Adjustment of the hydraulic line pressure by the decanter control panel (13) or by the operator, based on the calculation of the pressure required for the movement of the pistons, via the second pressure control valve (11₂),
         ∘ If the hydraulic piston line pressure is above or below the desired value, returning to the step "Receiving the pressure value information by the decanter control panel (13) via the second pressure gauge (10₂)",
         ∘ If the hydraulic piston line pressure is at the desired value, proceeding to the step "Checking the torque value of the decanter centrifuge machine by the decanter control panel (13)",
      - Checking the torque value of the decanter centrifuge machine by the decanter control panel (13),
         ∘ If the torque value is above the predefined torque threshold:
            ▪ Sending hydraulic oil (HO) to the gate valve piston (15) by the decanter control panel (13) via the fourth flow director (4₄),
            ▪ Closing of the gate valve (GV) by the gate valve piston (15),
            ▪ Returning to the step "Checking the torque value of the decanter centrifuge machine by the decanter control panel (13),
         ∘ If the torque value is below the predefined torque threshold, proceeding to the step "Not sending hydraulic oil (HO) to the gate valve piston (15) by the decanter control panel (13) via the fourth flow director (4₄)",
      - Not sending hydraulic oil (HO) to the gate valve piston (15) by the decanter control panel (13) via the fourth flow director (4₄),
      - Opening of the gate valve (GV),
      - Proceeding to the step "Operation of the rotating components of the decanter (12) by the decanter control panel (13)".
➢ Operation of the rotating components of the decanter (12) by the decanter control panel (13),
➢ Reaching the target rotational speed of the decanter (12),
➢ Product processing by the decanter (12),
➢ Pressing of the stop button of the decanter (12) by the operator,
➢ Performing the control checks of the hydraulic control and lubrication unit (16) by the decanter control panel (13),
   Cooling
      - Sending lubricating oil (LO) to the cooling line by the decanter control panel (13) via the first flow director (4₁),
      - Proceeding to the step "Checking whether the rotating components of the decanter (12) have stopped by the decanter control panel (13)",
   Lubrication
      - Sending lubricating oil (LO) to the lubrication line by the decanter control panel (13) via the second flow director (4₂),
      - Proceeding the step "Checking whether the rotating components of the decanter (12) have stopped by the decanter control panel (13)",
   Hydraulic
      - checking the torque value of the decanter (12) by the decanter control panel (13),
         ∘ If the torque value of the decanter (12) is above the predefined torque value:
            ▪ Sending hydraulic oil (HO) to the gate valve piston (15) by the decanter control panel (13) via the fourth flow director (4₄),
            ▪ Closing of the gate valve (GV) by the gate valve piston (15),
            ▪ Repeating the step "Checking the torque value of the decanter (12) by the decanter control panel (13)"
         ∘ If the torque value of the decanter (12) is not above the predefined torque value, proceeding to the step "Not sending hydraulic oil (HO) to the gate valve piston (15) by the decanter control panel (13) via the fourth flow director (4₄)",
      - Not sending hydraulic oil (HO) to the gate valve piston (15) by the decanter control panel (13) via the fourth flow director (4₄),
      - Opening of the gate valve (GV) by the gate valve piston (15),
      - Proceeding to the step "Checking whether the rotating components of the decanter (12) have stopped by the decanter control panel (13)",
➢ Checking whether the rotating components of the decanter (12) have stopped by the decanter control panel (13):
   - If the rotating components have not stopped, repeat the step "Checking the torque value of the decanter (12) by the decanter control panel (13)",
   - If the rotating components have not stopped, proceed to the step "Sending lubricating oil (LO) to the lubrication line by the decanter control panel (13) via the flow director (4)",
   - If the rotating components have stopped, proceed to the step "Stopping the motor of the hydraulic control and lubrication unit (16) by the decanter control panel (13)".
➢ Stopping the motor of the hydraulic control and lubrication unit (16) by the decanter control panel (13),
➢ Performing maintenance, service, and fault condition checks,
   - If a maintenance, service, or fault condition is present;
      ∘ Switching the Decanter (12) to service mode by the operator,
      ∘ Starting the motor of the hydraulic control and lubrication unit (16) by the operator by pressing the start button on the decanter control panel (13),
      ∘ Operating the hydraulic control and piston line pump, the third pump (2₃), by the decanter control panel (13),
      ∘ Pressing the chamber opening button on the decanter control panel (13) screen by the operator,
      ∘ Sending hydraulic oil (HO) to the upper case piston (14) by the decanter control panel (13) via the fifth flow director (4₅),
      ∘ Adjusting the flow rate via the speed control valve (8) by the decanter control panel (13),
      ∘ Opening of the Upper Case (UC),
      ∘ Pressing the chamber closing button on the decanter control panel (13) screen by the operator,
      ∘ Stopping the hydraulic oil (HO) flow to the upper case piston (14) by the Decanter Control Panel (13) via the fifth flow director (4₅),
      ∘ Closing of the upper case (UC),
   - If no maintenance, service, or fault condition is present, repeat the step "Cutting off the electricity to the Decanter (12)",
➢ Cutting off the electricity to the decanter (12).

In one embodiment of the invention, a gearbox lubrication line is included. The gearbox lubrication line comprises a single Pump (2). The Pump (2) supplies gearbox lubricating oil to the gearbox line at a flow rate of 0-15 L/min and at a pressure of 0-30 bar. The gearbox lubrication process begins with the operation of the decanter centrifuge machine and continues until the machine is stopped. The lubricating oil temperature is monitored by the decanter control panel (13) via the temperature sensor (6) located on the hydraulic control and lubrication unit (16). when the oil temperature reaches the predefined range of 0-120 °C, the cooling pump located on the lubrication unit is activated and simultaneously delivers the oil to the cooling line, thereby cooling the oil.

The operation sequence of the gearbox lubrication line consists of:
- Starting the decanter centrifuge machine,
- Activating the gearbox lubrication line pump (2) by the decanter control panel (13),
- Supplying lubricating oil (LO) to the gearbox lubrication line,
- Keep lubricating gearbox until the decanter stopped,
- Stopping the decanter (12),
- Stopping the gearbox lubrication line pump (2).

The operating sequence of the gearbox lubrication line is configured to ensure continuous lubrication until the rotating components of the decanter come to a complete stop. In this context, after the decanter centrifuge machine is started, the gearbox lubrication line pump (2) is activated and the supply of oil to the line begins. The lubrication process is maintained throughout the entire operation of the decanter and continues even after the decanter is commanded to stop, until its rotational speed reaches zero. Once the decanter has fully stopped, the gearbox lubrication pump is switched off, thereby completing the gearbox lubrication process.

In the hydraulic control and lubrication unit (16), multiple pumps (2) are used to operate different hydraulic and/or lubrication lines. These pumps (2) are designated as "first pump (21)," "second pump (23)," etc., solely for the purpose of distinguishing them from one another. In this context: the first pump (21) is used for the cooling (C) line, the second pump (22) for the bearing housing (BH) line, the third pump (23) for the gate valve (GV) and upper case (UP) line, and the fourth pump (24) for the gearbox line. Due to the modular structure of the unit, this naming convention can be appropriately extended if additional hydraulic and/or lubrication lines are integrated in the future.

A hydraulic control and lubrication method of the hydraulic control and lubrication unit (16), characterized by comprising;
- Starting the decanter centrifuge machine by the operator pressing the start button of the decanter centrifuge machine,
- Checking of the switches and sensors of the decanter centrifuge machine by the decanter control panel (13),
- Activating the hydraulic control and lubrication unit motor (1) by the decanter control panel (13),
- The operation of the pump or pumps (2) by the decanter control panel (13) to start lubricating desired systems,
- Operation of the rotating components of the decanter (12) by the decanter control panel (13),
- Reaching the target rotational speed of the decanter (12),
- Product processing by the decanter (12),
- Pressing of the stop button of the decanter (12) by the operator,
- Performing the control checks of the hydraulic control and lubrication unit (16) by the decanter control panel (13),
- Checking whether the rotating components of the decanter (12) have stopped by the decanter control panel (13),
- Stopping the motor of the hydraulic control and lubrication unit (16) by the decanter control panel (13),
- Performing maintenance, service, and fault condition checks,
- Cutting off the electricity to the decanter (12).

Checking of the switches and sensors of the decanter centrifuge machine by the decanter control panel (13) process step is characterized by comprising, In case an error signal is received, displaying a warning to the user and repeating the step "Starting the decanter centrifuge machine by the operator pressing the start button of the decanter centrifuge machine".

Checking of the switches and sensors of the decanter centrifuge machine by the decanter control panel (13) process step is characterized by comprising, In case no error signal is received, proceeding to the step "activating the hydraulic control and lubrication unit motor (1) by the decanter control panel (13)"
The operation of the pumps (2) by the decanter control panel (13) process step is characterized by comprising,
- Checking the lubricating oil temperature value by the decanter control panel (13) using the data received from the temperature sensor (6),
- Activation of the air-cooled heat exchanger fan (5) by the decanter control panel (13),
- Operation of the first pump (2₁), which is the cooling line pump, by the decanter control panel (13),
- Checking of the first oil contamination sensor (7₁) by the decanter control panel (13),
- Sending lubricating oil (LO) to the cooling line by the decanter control panel (13) via the first flow director (4₁),
- Proceeding to the step "Operation of the rotating components of the decanter (12) by the decanter control panel (13)".

Checking the lubricating oil temperature value by the decanter control panel (13) using the data received from the temperature sensor (6) process step is characterized by comprising, If the lubricating oil (LO) temperature value based on the data from the temperature sensor (6) is not above the predefined temperature value
   - the decanter control panel (13) turns off the air-cooled heat exchanger fan (5),
   - Proceeding to the step "Operating the first pump (2₁), which is the cooling line pump, by the decanter control panel (13)".
Checking the lubricating oil temperature value by the decanter control panel (13) using the data received from the temperature sensor (6) process step is characterized by comprising, if the lubricating oil (LO) temperature value based on the data from the temperature sensor (6) is above the predefined temperature value, proceeding to the step "Activating the air-cooled heat exchanger fan (5) by the decanter control panel (13)".
Operation of the first pump (2₁), which is the cooling line pump, by the decanter control panel (13) process step is characterized by comprising, repeating the step "Checking the lubricating oil (LO) temperature value by the decanter control panel (13) using the data received from the temperature sensor (6)"
Checking of the first oil contamination sensor (7₁) by the decanter control panel (13) process step is characterized by comprising, if contamination information is received from the first oil contamination sensor (7₁),
   - the decanter control panel (13) displays an oil change warning on the machine screen,
   - Proceeding to the step "Sending lubricating oil (LO) to the cooling line by the Decanter control panel (13) via the first flow director (4₁)".
Checking of the first oil contamination sensor (7₁) by the decanter control panel (13) process step is characterized by comprising, if no contamination information is received from the first oil contamination sensor (7₁), proceeding to the step "Sending lubricating oil (LO) to the cooling line by the decanter control panel (13) via the first flow director (4₁).

The operation of the pumps (2) by the decanter control panel (13) process step is characterized by comprising,
- Operation of the second pump (2₂), which is the lubrication line pump, by the decanter control panel (13),
- Adjustment of the lubrication line pressure by the decanter control panel (13) or by the operator via the first pressure control valve (11₁),
- Sending lubricating oil (LO) to the lubrication line by the decanter control panel (13) via the second flow director (4₂) and valve (9),
- Lubrication of the bearing connections (17),
- Checking the temperature value of the bearing connections (17) by the decanter control panel (13) using the temperature sensor (6),
- Proceeding to the step "Operation of the rotating components of the decanter (12) by the decanter control panel (13)".

Adjustment of the lubrication line pressure by the decanter control panel (13) or by the operator via the first pressure control valve (11₁) process step is characterized by comprising, if the lubricating oil (LO) pressure is not adjusted to the predefined value via the first pressure control valve (11₁), returning to the step "Receiving the pressure value information by the decanter control panel (13) via the first pressure gauge (10₁)".

Adjustment of the lubrication line pressure by the decanter control panel (13) or by the operator via the first pressure control valve (11₁) process step is characterized by comprising, if the lubricating oil (LO) pressure is adjusted to the predefined value via the first pressure control valve (11₁), proceeding to the step "Sending lubricating oil (LO) to the lubrication line by the decanter control panel (13) via the second flow director (4₂) and valve (9)".

Checking the temperature value of the bearing connections (17) by the decanter control panel (13) using the temperature sensor (6) process step is characterized by comprising, if the temperature of the bearing connections (17) is above the predefined temperature value,
- the decanter (12) is stopped,
- returning to the step "starting the decanter (12) by the operator pressing the start button of the decanter centrifuge machine".

Checking the temperature value of the bearing connections (17) by the decanter control panel (13) using the temperature sensor (6) process step is characterized by comprising, if the temperature of the bearing connections (17) is below the predefined value, proceeding to the step "Operation of the rotating components of the decanter (12) by the decanter control panel (13)".

The operation of the pumps (2) by the decanter control panel (13) process step is characterized by comprising,
- Operation of the third pump (2₃), which is the hydraulic piston line pump, by the decanter control panel (13),
- Receiving the pressure value information by the decanter control panel (13) via the second pressure gauge (10₂),
- Adjustment of the hydraulic line pressure by the decanter control panel (13) or by the operator, based on the calculation of the pressure required for the movement of the pistons, via the second pressure control valve (11₂),
- Checking the torque value of the decanter centrifuge machine by the decanter control panel (13),
- Not sending hydraulic oil (HO) to the gate valve piston (15) by the decanter control panel (13) via the fourth flow director (4₄),
- Opening of the gate valve (GV),
- Proceeding to the step "Operation of the rotating components of the decanter (12) by the decanter control panel (13)".

Adjustment of the hydraulic line pressure by the decanter control panel (13) or by the operator, based on the calculation of the pressure required for the movement of the pistons, via the second pressure control valve (112) process step is characterized by comprising, if the hydraulic piston line pressure is above or below the desired value, returning to the step "Receiving the pressure value information by the decanter control panel (13) via the second pressure gauge (102)".

Adjustment of the hydraulic line pressure by the decanter control panel (13) or by the operator, based on the calculation of the pressure required for the movement of the pistons, via the second pressure control valve (112) process step is characterized by comprising, if the hydraulic piston line pressure is at the desired value, proceeding to the step "Checking the torque value of the decanter centrifuge machine by the decanter control panel (13)".

Checking the torque value of the decanter centrifuge machine by the decanter control panel (13) process step is characterized by comprising, if the torque value is above the predefined torque threshold,
- Sending hydraulic oil (HO) to the gate valve piston (15) by the decanter control panel (13) via the fourth flow director (44),
- Closing of the gate valve (GV) by the gate valve piston (15),
- Returning to the step "Checking the torque value of the decanter centrifuge machine by the decanter control panel (13)".

Checking the torque value of the decanter centrifuge machine by the decanter control panel (13) process step is characterized by comprising, If the torque value is below the predefined torque threshold, proceeding to the step "Not sending hydraulic oil (HO) to the gate valve piston (15) by the decanter control panel (13) via the fourth flow director (44)".

Performing the control checks of the hydraulic control and lubrication unit (16) by the decanter control panel (13) process step is characterized by comprising,
- Sending lubricating oil (LO) to the cooling line by the decanter control panel (13) via the first flow director (4₁),
- Proceeding to the step "checking whether the rotating components of the decanter (12) have stopped by the decanter control panel (13)".

Performing the control checks of the hydraulic control and lubrication unit (16) by the decanter control panel (13) process step is characterized by comprising,
- Sending lubricating oil (LO) to the lubrication line by the decanter control panel (13) via the second flow director (4₂),
- Proceeding to the step "checking whether the rotating components of the decanter (12) have stopped by the decanter control panel (13).

Performing the control checks of the hydraulic control and lubrication unit (16) by the decanter control panel (13) process step is characterized by comprising,
- checking the torque value of the decanter (12) by the decanter control panel (13),
- Not sending hydraulic oil (HO) to the gate valve piston (15) by the decanter control panel (13) via the fourth flow director (4₄),
- Opening of the gate valve (GV) by the gate valve piston (15),
- Proceeding to the step "checking whether the rotating components of the decanter (12) have stopped by the decanter control panel (13)".

Checking the torque value of the decanter (12) by the decanter control panel (13) process step is characterized by comprising, if the torque value of the decanter (12) is above the predefined torque value,
- sending hydraulic oil (HO) to the gate valve piston (15) by the decanter control panel (13) via the fourth flow director (4₄),
- closing of the Gate Valve (GV) by the gate valve piston (15),
- repeating the step "Checking the torque value of the decanter (12) by the decanter control panel (13)".

Checking the torque value of the decanter (12) by the decanter control panel (13) process step is characterized by comprising, if the torque value of the decanter (12) is not above the predefined torque value, proceeding to the step "Not sending hydraulic oil (HO) to the gate valve piston (15) by the decanter control panel (13) via the fourth flow director (4₄)".

Checking whether the rotating components of the decanter (12) have stopped by the decanter control panel (13) process step is characterized by comprising, if the rotating components have not stopped, repeat the step "checking the torque value of the decanter (12) by the decanter control panel (13)".

Checking whether the rotating components of the decanter (12) have stopped by the decanter control panel (13) process step is characterized by comprising, If the rotating components have not stopped, proceed to the step "sending lubricating oil (LO) to the lubrication line by the decanter control panel (13) via the flow director (4)".

Checking whether the rotating components of the decanter (12) have stopped by the decanter control panel (13) process step is characterized by comprising, if the rotating components have stopped, proceed to the step "Stopping the motor of the hydraulic control and lubrication unit (16) by the decanter control panel (13)".

Performing maintenance, service, and fault condition checks process step is characterized by comprising, if a maintenance, service, or fault condition is present,
- Switching the decanter (12) to service mode by the operator,
- Starting the motor of the hydraulic control and lubrication unit (16) by the operator by pressing the start button on the decanter control panel (13),
- Operating the hydraulic control and piston line pump, i.e., the third pump (23), by the decanter control panel (13),
- Pressing the chamber opening button on the decanter control panel (13) screen by the operator,
- Sending hydraulic oil (HO) to the upper case piston (14) by the decanter control panel (13) via the fifth flow director (45),
- Adjusting the flow rate via the speed control valve (8) by the decanter control panel (13),
- Opening of the upper case (UC),
- Pressing the chamber closing button on the decanter control panel (13) screen by the operator,
- Stopping the hydraulic oil (HO) flow to the upper case piston (14) by the Decanter Control Panel (13) via the fifth flow director (45),
- Closing of the upper case (UC).

Performing maintenance, service, and fault condition checks process step is characterized by comprising, if no maintenance, service, or fault condition is present, repeat the step "cutting off the electricity to the decanter (12)".

## Claims

1. A hydraulic control and lubrication unit (16), **characterized by** comprising,
- at least one motor (1) for powering and operating the pumps (2),
- at least one pumps (2) for transferring oil to the lubrication line, hydraulic line and cooling line,
- an oil tank (3) containing hydraulic oil (HO) and lubricating oil (LO) and having at least two compartments to prevent mixing of hydraulic oil (HO) and lubricating oil (LO),
- At least one flow director (4) for directing hydraulic oil (HO) and lubricating oil (LO) to the relevant line,
- air-cooled heat exchanger (5) or water-cooled heat exchanger for cooling the lubricating oil (LO),
- At least one temperature sensor (6) that measures the temperature of the lubricating oil (LO) in the oil tank (3),
- At least one oil contamination sensor (7) that measures the contamination of the hydraulic oil (HO) and lubricating oil (LO) and sends a signal to the decanter control panel (13) when the hydraulic oil (HO) and lubricating oil (LO) are contaminated,
- At least one speed control valve (8) that regulates the flow rate of hydraulic oil (HO) directed to an upper case pistons (14) and prevents sudden closure of the upper case pistons (14) in case of a pressure drop,
- At least one valve (9) that controls the flow rate of lubricating oil (LO) for the bowl bearing lubrication,
- At least one pressure gauge (10) that measures and displays the pressure of the hydraulic and lubrication lines,
- At least one pressure control valve (11) that allows adjustment of the pressure and flow rates in the lubrication and hydraulic lines,
- decanter control panel (13), which includes a user interface and controls the electrical system of the decanter, which checks the switches and sensors, activates the hydraulic control and lubrication unit motor (1), operates the pumps (2), monitors the temperature data via the temperature sensor (6) and the oil contamination status via the oil contamination sensor (7), managing the cooling and lubrication operations through the air-cooled heat exchanger fan (5), flow directors (4), and valve (9); adjusts the pressure using the pressure gauges (10) and pressure control valves (11); controls the opening and closing of the gate valve (GV) via the gate valve piston (15) by tracking the torque value; and in maintenance and service mode, manages the opening and closing of the upper case (UC) via the upper case piston (14), and is configured to check for the presence of the lubrication line, the hydraulic line and the cooling line,
- a gate valve piston (15), which is connected to the decanter (12) via the gate valve piston connection (19), is located at the solid product outlet of the decanter (12) and controls the flow,
- the upper case piston (14), which is connected to the decanter via the upper case piston connection (18), controls the upper cases (UC) of the decanter housing.

2. A hydraulic control and lubrication unit (16) according to Claim 1, **characterized by** comprising, at least one pump (2) for each line, including the cooling line functioning as a lubricating line, the lubricating line that delivers lubricating oil (LO) to the bearing connections (17), the gearbox line, and the hydraulic piston line that provides hydraulic oil (HO) transfer to the upper case piston (14) and the gate valve piston (15).

3. A hydraulic control and lubrication method of the hydraulic control and lubrication unit (16), **characterized by** comprising,
- Starting the decanter centrifuge machine by the operator pressing the start button of the decanter centrifuge machine,
- Checking of the switches and sensors of the decanter centrifuge machine by the decanter control panel (13),
- Activating the hydraulic control and lubrication unit motor (1) by the decanter control panel (13), if no error signal is received,
- Checking, by the decanter control panel (13), whether a cooling line is present and, if a cooling line is present, actuating the third pump (2₁) by the decanter control panel (13),
- Checking, by the decanter control panel (13), whether a lubrication line is present and, if a lubrication line is present, actuating the second pump (2₂) by the decanter control panel (13),
- Checking, by the decanter control panel (13), whether a hydraulic line is present and, if a hydraulic line is present, actuating the third pump (2₃) by the decanter control panel (13),
- Operation of the rotating components of the decanter (12) by the decanter control panel (13),
- Reaching the target rotational speed of the decanter (12),
- Product processing by the decanter (12),
- Pressing of the stop button of the decanter (12) by the operator,
- Checking whether the rotating components of the decanter (12) have stopped by the decanter control panel (13), if the rotating components have stopped, proceed to the next step,
- Stopping the motor of the hydraulic control and lubrication unit (16) by the decanter control panel (13),
- Performing maintenance, service, and fault condition checks,
- Cutting off the electricity to the decanter (12) if no maintenance, service, or fault condition is present.

4. A hydraulic control and lubrication method of the hydraulic control and lubrication unit (16) according to the claim 3, wherein starting the decanter centrifuge machine by the operator pressing the start button of the decanter centrifuge machine process step is **characterized by** comprising,
- activating the gearbox lubrication line pump (2) by the decanter control panel (13),
- supplying lubricating oil (LO) to the gearbox lubrication line,
- keep lubricating gearbox until the decanter stopped,
- stopping the decanter (12),
- stopping the gearbox lubrication line pump (2).

5. A hydraulic control and lubrication method of the hydraulic control and lubrication unit (16) according to the claim 3, wherein the checking of the switches and sensors of the decanter centrifuge machine by the decanter control panel (13) process step is **characterized by** comprising, in case an error signal is received, displaying a warning to the user and repeating the step "Starting the decanter centrifuge machine by the operator pressing the start button of the decanter centrifuge machine".

6. A hydraulic control and lubrication method of the hydraulic control and lubrication unit (16) according to the claim 3, wherein the Checking, by the decanter control panel (13), whether a cooling line is present and, if a cooling line is present, actuating the first pump (2₁) by the decanter control panel (13) process step is **characterized by** comprising,
- Checking the lubricating oil temperature value by the decanter control panel (13) using the data received from the temperature sensor (6),
- Activation of the air-cooled heat exchanger fan (5) by the decanter control panel (13) if the lubricating oil (LO) temperature value based on the data from the temperature sensor (6) is above the predefined temperature value,
- Operation of the first pump (2₁), which is the cooling line pump, by the decanter control panel (13),
- Checking of the first oil contamination sensor (7₁) by the decanter control panel (13), if contamination is present, an error is displayed,
- Sending lubricating oil (LO) to the cooling line by the decanter control panel (13) via the first flow director (4₁) if no contamination information is received,
- Proceeding to the step "Operation of the rotating components of the decanter (12) by the decanter control panel (13)".

7. A hydraulic control and lubrication method of the hydraulic control and lubrication unit (16) according to the claim 3, wherein the checking, by the decanter control panel (13), whether a lubrication line is present and, if a lubrication line is present, actuating the second pump (2₂) by the decanter control panel (13) process step is **characterized by** comprising,
- Operation of the second pump (2₂), which is the lubrication line pump, by the decanter control panel (13),
- Adjustment of the lubrication line pressure by the decanter control panel (13) or by the operator via the first pressure control valve (11₁),
- Sending lubricating oil (LO) to the lubrication line by the decanter control panel (13) via the second flow director (4₂) and valve (9) if the lubricating oil (LO) pressure is adjusted to the predefined value via the first pressure control valve (11₁),
- Lubrication of the bearing connections (17),
- Checking the temperature value of the bearing connections (17) by the decanter control panel (13) using the temperature sensor (6),
- Proceeding to the step "Operation of the rotating components of the decanter (12) by the decanter control panel (13)" if the temperature of the bearing connections (17) is between the predefined values; if not, returning to the step "starting the decanter (12) by the operator pressing the start button of the decanter centrifuge machine".

8. A hydraulic control and lubrication method of the Hydraulic Control and Lubrication Unit (16) according to the claim 3, wherein the Checking, by the decanter control panel (13), whether a cooling line is present and, if a cooling line is present, actuating the third pump (2₃) by the decanter control panel (13), process step is **characterized by** comprising,
- Operation of the third pump (2₃), which is the hydraulic piston line pump, by the decanter control panel (13),
- Receiving the pressure value information by the decanter control panel (13) via the second pressure gauge (10₂),
- Adjustment of the hydraulic line pressure by the decanter control panel (13) or by the operator, based on the calculation of the pressure required for the movement of the pistons, via the second pressure control valve (11₂),
- Checking the torque value of the decanter centrifuge machine by the decanter control panel (13) if the hydraulic piston line pressure is at the desired value,
- Not sending hydraulic oil (HO) to the gate valve piston (15) by the decanter control panel (13) via the fourth flow director (4₄) if the torque value is below the predefined torque threshold,
- Opening of the gate valve (GV),
- Proceeding to the step "Operation of the rotating components of the decanter (12) by the decanter control panel (13)".

9. A hydraulic control and lubrication method of the hydraulic control and lubrication unit (16) according to the claim 3, wherein performing maintenance, service, and fault condition checks process step is **characterized by** comprising, if a maintenance, service, or fault condition is present,
- Switching the decanter (12) to service mode by the operator,
- Starting the motor of the hydraulic control and lubrication unit (16) by the operator by pressing the start button on the decanter control panel (13),
- Operating the hydraulic control and piston line pump, i.e., the third pump (2₃), by the decanter control panel (13),
- Pressing the chamber opening button on the decanter control panel (13) screen by the operator,
- Sending hydraulic oil (HO) to the upper case piston (14) by the decanter control panel (13) via the fifth flow director (4₅),
- Adjusting the flow rate via the speed control valve (8) by the decanter control panel (13),
- Opening of the upper case (UC),
- Pressing the chamber closing button on the decanter control panel (13) screen by the operator,
- Stopping the hydraulic oil (HO) flow to the upper case piston (14) by the Decanter Control Panel (13) via the fifth flow director (4₅),
- Closing of the upper case (UC).
